# EUROPEAN PATENT SPECIFICATION

(11) **EP 2 219 860 B1**
(45) Date of publication and mention of the grant of the patent: **10.01.2018**
(21) Application number: 08804115.7
(22) Date of filing: 12.09.2008
(51) Int. Cl.: B32B 15/01, B22D 11/00, C22C 21/02, C22C 21/08, C22C 21/14, C22C 21/16

(54) **CLAD SHEET PRODUCT AND METHOD FOR ITS PRODUCTION**
PLATTIERTES BLECHPRODUKT UND HERSTELLUNGSVERFAHREN DAFÜR
PRODUIT DE TÔLE PLAQUÉE ET SON PROCÉDÉ DE PRODUCTION

(30) Priority: 05.11.2007 EP 07021481
(43) Date of publication of application: 25.08.2010
(73) Proprietor: Novelis, Inc., Atlanta, GA 30326 (US)
(72) Inventor: TIMM, Juergen, 78256 Steisslingen (DE); BASSI, Corrado, 3970 Salgesch (CH)
(74) Representative: Weickmann & Weickmann PartmbB
(86) International application number: PCT/EP2008/062151
(87) International publication number: WO 2009/059826

(56) References cited:
- EP-A- 1 170 118
- EP-A- 1 852 250
- WO-A-98/28130
- WO-A-2004/112992
- WO-A-2007/118313
- WO-A1-2007/128391
- GB-A- 2 378 450
- JP-A- 2000 129 382
- US-B2- 6 994 760
- DATABASE WPI Week 198742 Thomson Scientific, London, GB; AN 1987-295722 XP002481181 -& JP 62 207642 A (KOBE STEEL LTD) 12 September 1987 (1987-09-12) cited in the application

## Description

### 1. Technical Field

This invention relates to a composite aluminium sheet product comprising a core of a 6XXX series aluminium alloy and at least one clad layer of another 6XXX series aluminium alloy. The sheet product has uses in automotive and aerospace applications.

### 2 . Background:

The use of aluminium sheet materials in the production of automobiles has been established for many years. A range of different alloys are used depending on the particular requirements of the automobile designers. In certain applications it is desirable that the material be of high strength. Yet other applications require higher formability and, in such cases, strength is considered less important. There has also been a desire for materials that deform easily under impact, for example in the event of collision with pedestrians and such materials may have even lower strengths. But even a high strength material needs to possess some formability because the use of such sheet always requires that they be shaped in some way.

Typically the aluminium alloys used are from the 6XXX series of alloys, namely those whose principal alloying elements are Mg and Si, or from the 5XXX series of alloys, where the principal alloying element is Mg.

In many applications it is desirable that the material be readily formed and yet, following a paint-bake treatment, develops sufficient mechanical strength. 6XXX series alloys are particularly suitable for this because of their ageing response. A significant amount of work has taken place over the last 15 to 20 years to understand the ageing processes in these alloys and various processes exist to maximize the so-called paint-bake response.

Although there is a significant benefit to automotive manufacturers in using aluminium alloys, lighter vehicles greatly improving fuel consumption and performance, alternatives exist based on steel. More than 50% of the body weight of automobiles comprises steel alloys where the yield strength of the metal is 350, 450 or even 550 MPa.

The most common high strength aluminium alloy sheet in use today is the AA6111 composition, an alloy developed by Alcan in the early 1980s and disclosed in US 4,614,552.

In order to maintain and grow the use of aluminium in such vehicles it is desirable to have a higher strength product yet retain (or improve) existing levels of formability whilst maintaining (or improving) other qualities such as corrosion performance.

### 3. Prior art:

Japanese patent application JP 62-207642 published on 12 September, 1987 suggests cladding a 6XXX series alloy core (aluminium with Mg and Si as the main alloying elements) with a 5XXX series alloy clad layer (aluminium with Mg as the main alloying element). This publication teaches that a Si content above 0.5wt% in the clad layer is undesirable because it will reduce formability. The mix of 6XXX series and 5XXX series alloys in such a product makes it less favourable for recycling.

In addition the combination of 6XXX series alloys with 1XXX, 2XXX and 3XXX series alloys is disclosed in US 2006-0185816. In particular the combination of a core of conventional composition alloy AA6111 was produced with clad layers of conventional AA3003 or AA3104. The composite structure provided a significant enhancement of bendability/formability when compared with monolithic AA6111. The tensile strengths were reported as being similar to the monolithic AA6111 alloy, but not higher.

Because there is usually a compromise between strength and formability, neither publication addresses the need for a higher strength material with good formability and corrosion performance

JP-A-2000/129382 discloses an Al-Mg-Si alloy with 0.2 to 1.8%Si, 0.2 to 1.6%Mg and 0.5 to 1.5%Cu as core alloy, clad in an alloy of the same composition except that its copper content is ≤ 0.1 %.

The copper-free surface cladding alloy layer takes up at least 3% and up to 20% of the total thickness of the clad plate. The clad plate is said to offer excellent formability and at the same time excellent resistance to filiform corrosion.

US-B2-6994.760 also advocates cladding to enhance corrosion resistance in plates of Al-Mg-Si (AA6000) alloys. For the cladding layer, alloys are recommended that have more than 1% of alloying additions. Alloys AA6003 and AA6253 are given as exemplars.

WO 2007/128391 A1 relates to a clad sheet product comprising a core sheet and a cladding layer on one or both core sheet surfaces, the core sheet having an aluminium alloy of the AA6000-series alloys and at least one cladding consisting of an aluminium alloy of the AA6000-series alloys having a Cu-content of less than 0.25 wt.% and preferably less than 0.20 wt.%.

It is, therefore, an object of the invention to provide an aluminium alloy clad product having a higher strength and a good formability as well as corrosion resistance especially for use in the automotive industry. It is, furthermore, an object of the invention to provide a method for manufacturing such an aluminium alloy clad product. This object is achieved by the clad sheet product comprising the features of claim 1 as well as the method comprising the features of claim 15. Preferred embodiments of the invention are set out in the dependent claims, respectively.

### 4. Summary of the invention:

The new product provides the following benefits:
- an enhanced mechanical performance compared with a conventional monolithic high strength aluminium sheet product. In particular: a higher strength, an excellent bake hardenability and a better formability.
- a good corrosion resistance, which is better than in a conventional monolithic high strength aluminium sheet.
- the product is easier to recycle and has greater value as scrap material because both the core and the clad layers are made from 6XXX series alloys.

In a first aspect of the invention, a clad sheet product is disclosed, which comprises a core layer and at least one clad layer which have different alloy constituents essentially differing in their Mg, Si and Cu contents. The term "sheet", as herein broadly used, is intended to embrace gauges sometimes referred to as "plate" or "foil" as well as sheet gauges intermediate plate and foil.

It was found that the clad sheet product according to the invention has a superior combination of strength and formability, as desired for automobile body use.

The reasons for limiting the alloying constituent in a manner as realized in the claims are given below:
Mg: The Mg content in the core layer is set to be 0.90 - 1.40 weight %. Preferably, the Mg content is 0.90 - 1.10 weight %, most preferable about 0.95 %. The Mg content in the clad layer is set to be 0.30 - 0.70 weight %. Preferably, the Mg content is 0.60 - 0.70 weight %, most preferably with a target value of about 0.61 %.

In this context, the skilled technician is fully aware of the fact that the actually measured values in a sheet product might slightly deviate from the desired target values, especially in large scale facilities. This deviation is mainly caused by measurement inaccuracies during the preparation of molten metal prior to casting as well as undesired reactions of the added constituents or its byproducts with the slag, the atmosphere, or the lining of the vessels in which the molten metal is stored or cast. The target value should be construed, therefore, as being an amount plus or minus the typical casting variation for each element.

Si: The Si content in the core layer is set to be 1.00 to 1.40 weight %. Preferably, the Si content is 1.00 to 1.10 weight %, most preferable about 1.06 weight %. The Si content in the clad layer is set to be 0.30 - 0.80 weight %. Preferably, the Si content is 0.50 - 0.80 weight %, most preferably with a target value of about 0.60 %.

Mg and Si combine mostly as Mg₂Si, imparting a considerable strength improvement after age-hardening. Some excess Si, above the stoichiometric ratio of Mg₂Si and for the formation of Al(FeMn)Si constituents, is required to aid in accelerating artificial ageing. The content of Mg and Si is limited, because excess Si is detrimental to formability in general, especially with respect to the minimum crack-free bending radius of the sheet. The Mg and Si contents are, therefore, balanced in a manner as to achieve the desired strengthening effect and to prevent a high amount of excess Si in the material.

Cu: The Cu content in the core layer is set to be 0.80 to 1.40 weight %. Preferably, the Cu content is 0.80 to 1.00 weight %, most preferably with a target value of about 0.83 weight %. The Cu content in the clad layer is set to be less than 0.30 weight %. Most preferably, the Cu content is adjusted by setting a target value of about 0.14 %. The Cu content of the present alloys contributes to yield strength and especially to rapidity of age-hardening response, e.g. when the sheet is subjected to a paint-baking treatment, yet with significantly less adverse effect on bendability than excess silicon. It was, therefore, the aim of the present invention to adjust the Cu contents in both the core layer and the clad layer(s) in a manner as to achieve a relatively high yield strength within the core layer, and a relatively high bendability in the at least one clad layer.

Fe: The Fe content in the core layer is set to be less than 0.30 weight %. The Fe content in the clad layer is also set to be less than 0.30 weight %. The Fe content is found to have a significant effect on minimum crack-free bending radius. Fe is usually not soluble in aluminium but is present as second phase constituents, e.g. FeAl₃ or an Al(FeMn)Si phase, frequently located at grain boundaries. Upon bending, cracking initiates at constituent interfaces and propagates. It is therefore believed that low Fe content and preferably a fine distribution of the iron-bearing phases improves the bending characteristics of the sheet product.

Mn: The Mn content in the core layer is set to be less than 0.40 weight %. Preferably, the Mn content is 0.30 - 0.35 weight %, most preferably with a target value of about 0.32 %. The Mn content in the clad layer is set to be less than 0.30 weight %. Preferably, the Mn content is 0.05 - 0.20 weight %, most preferably with a target value of about 0.06 %. Manganese is believed to contribute to strength, and assists in controlling the grain size and the toughness of the heat-treated sheet. Excessive amounts of 0.40 % or more in the core layer or 0.30 % in the at least one clad layer, however, increase the size of the Fe-containing particles with which Mn is associated in an undesired manner, thus adversely affecting bendability of the sheet product according to the invention.

Mn additionally combines with Fe and Si to form fine dispersoids of cubic alpha-Al(Mn,Fe)Si type which contribute slightly to the strength of the alloy but also serve to promote the transformation of the as-cast β-phase (detrimental to formability) to the α-phase during homogenization. As a consequence, the present alloys of both the core layer and the clad layer optionally contain Mn but at a low level, if at all present.

In a preferred embodiment of the invention, the clad sheet product has a yield strength Rp 0.2 of at least 140 MPa, in its T4 temper condition, i.e. after a solution heat treatment and a after naturally ageing has taken place. In this condition, the formability, expressed by the angle of deformation in a test based on, but slightly differing from the test according to DIN 50111, preferably ranges from 5° at a pre-strain of 0%, to a maximum angle of deformation of 75° at a pre-strain of 15%.

In another preferred embodiment of the invention, the clad sheet product has a yield strength Rp 0.2 of at least 140 MPa, more preferred of at least 240 MPa after bake hardening.

The clad sheet product according to the invention thus provides an improved combination of high amounts of Mg, Si and especially Cu in the core layer than in the clad layer. The combination achieves a better bendability than a monolithic alloy containing the alloying elements of the core layer, as well as a higher strength compared to the monolithic core alloy.

In a second aspect of the invention, a method for producing a clad sheet product is disclosed, wherein the clad sheet product comprises a core layer and at least one clad layer which have different alloy constituents essentially differing in their Mg, Si and Cu contents. The clad sheet product of the invention is produced from a composite ingot having the core layer and the clad layer. These composite ingots are achieved by a co-casting method. These co-casting methods are in general well known to the skilled technician. An especially preferred way of producing co-cast composite ingots is, however, disclosed in WO 2004/112992.

This is a method for the casting of a composite metal ingot comprising at least two layers formed of one or more alloy compositions. The method according to WO 2004/112992 comprises providing an open ended annular mould having a feed end and an exit end wherein molten metal is added at the feed end and a solidified ingot is extracted from the exit end.

Divider walls are used to divide the feed end into at least two separate feed chambers, the divider walls terminating above the exit end of the mould and where each feed chamber is adjacent at least one other feed chamber. For each pair of adjacent feed chambers a first stream of a first alloy is fed to one of the pair of feed chambers to form a pool of metal in the first chamber and a second stream of a second alloy is fed through the second of the pair of feed chambers to form a pool of metal in the second chamber. The first metal pool contacts the divider wall between the pair of chambers to cool the first pool so as to form a self supporting surface adjacent the divider wall. The second metal pool is then brought into contact with the first pool so that the second pool first contacts the self-supporting surface of the first pool at a point where the temperature of the self-supporting surface is between the solidus and liquidus temperatures of the first alloy. The two alloy pools are thereby joined as two layers and cooled to form a composite ingot.

According to the invention, after the composite ingot has been produced, the ingot is homogenized, hot and cold rolled to a sheet of desired gauge. Subsequently, the rolled sheet is solution heat treated (SHT), followed by quenching, pre-aging and slowly cooling to room temperature. Thereafter the sheet product may be subject to bake hardening typical within the industry, i.e. at temperatures in the range of 170°C and 205°C. The duration of the pre-aging treatment is preferably between 20 and 30 minutes.

The slow cooling of the pre- aged sheet product is preferably realized in a coil. Most preferred cooling rates are less than 25°C/hour.

The method according to the invention serves for producing a clad sheet product which provides the above mentioned advantageous effects over the composite alloy sheets known from the prior art. This product according to the invention is achieved in a cost effective and reliable manner with a high degree of flexibility in adjusting the method parameters in the distinct method steps.

### 5. Brief description of the drawings

In the following, the invention will be described in more detail by referring to the attached drawings which show the results of tests conducted at preferred embodiment of the claimed invention. Neither the detailed description nor the Figures are intended to limit the scope of protection which is defined by the appending claims.

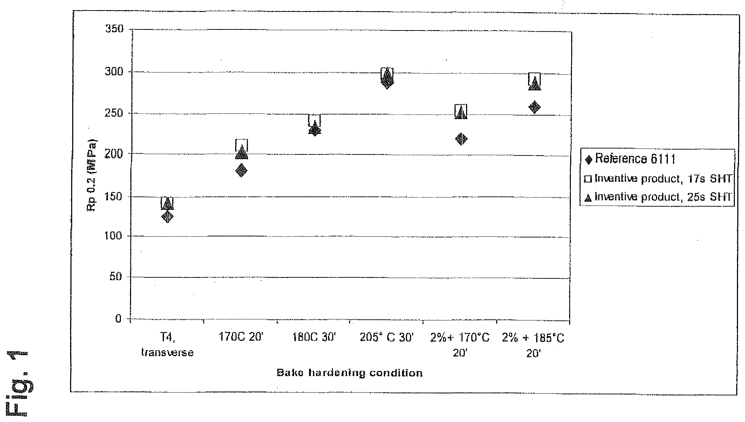

Fig. 1 is a diagram illustrating the results of tensile tests performed at different bake hardening conditions for sheets according to the invention, and for comparative sheets;

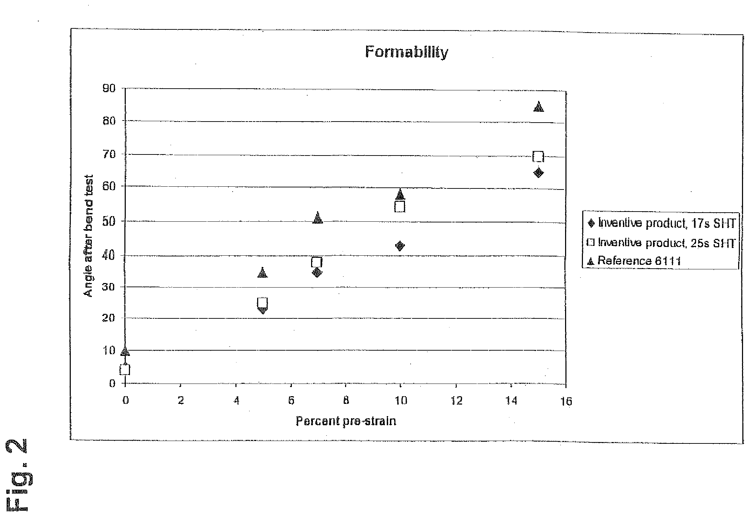

Fig. 2 is a diagram illustrating the results of deformation tests performed with different pre-strains at sheets according to the invention, and at comparative sheets.

### 6. Examples and results:

### a) Sample preparation:

Composite ingots having a thickness of 560mm were cast using the process described in WO 04/112992. The composition of the core in weight % was:

| | |
|---|---|
| Mg | 0.95 |
| Si | 1.06 |
| Cu | 0.83 |
| Mn | 0.32 |
| Fe | 0.21 |

others <0.05 each and <0.15 in total
balance aluminium
and the composition of the clad layer in weight % was:

| | |
|---|---|
| Mg | 0.61 |
| Si | 0.60 |
| Cu | 0.14 |
| Mn | 0.06 |
| Fe | 0.16 |

others <0.05 each and <0.15 in total
balance aluminium.

The ingot was scalped to remove 25mm from each side resulting in a sheet where the two clad layers represented 10% of the total ingot thickness.

The ingot was then homogenized at a temperature of 530°C for 17 hours after a heat-up time of 10 hours.

The homogenized ingot was then hot rolled using conventional practices and then cold rolled to various final gauges of 1.2 or 1.0 mm.

The cold rolled sheet was then solution treated in a continuous solution treatment line with a furnace temperature of 580°C to provide peak metal temperatures around 565°C. Two line speeds were used which meant the sheet experienced a duration within the furnace of either 17 or 25 seconds.

After solution heat treatment the sheet was water quenched and subjected to a pre-aging practice followed by slow cooling to room temperature.

For comparison, the well-established automotive sheet alloy AA6111 was used, manufactured in the same way.

To simulate a T4 temper, samples of the inventive product and reference 6111 sheet thus produced were placed in a furnace at 65C for 24 hours, removed and allowed to cool.

Apart from this temper, other samples were subjected to various additional aging treatments representative of the paint-bake processing heat treatments commonly used in automobile production. The various conditions were:
170°C for 20 minutes
180°C for 30 minutes
205°C for 30 minutes
2% strain plus 170°C for 20 minutes
2% strain plus 185°C for 20 minutes

Samples of the T4 material were also subjected to different amounts of pre-strain to simulate the kind of forming used in the industry when making shaped parts. The amounts of pre-strain were 5, 7, 10 and 15%.

### b) Mechanical Properties:

The tensile properties of all the samples were measured using a Zwick test machine Z050.

Table 1 below shows the tensile test data, Rp 0.2 (MPa) for different bake hardening conditions

**Table 1**

| Bake hardening conditions | Reference 6111 | Inventive product, 17s SHT | Inventive product, 25s SHT |
|---|---|---|---|
| T4, transverse | 125 | 142 | 142 |
| 170°C 20' | 183 | 210 | 204 |
| 180°C 30' | 230 | 241 | 234 |
| 205°C 30' | 288 | 297 | 299 |
| 2%+ 170°C 20' | 220 | 255 | 253 |
| 2% + 185°C 20' | 260 | 293 | 289 |

Regardless of solution treatment time, the inventive product displayed higher yield strengths than the monolithic reference 6111.

The formability of the samples was measured using a bend test based on DIN 50111, but with slight modifications to the procedure. In this test a 60mm x 60mm piece of sheet, under different pre-strain conditions, was placed over two cylindrical rolls, the rolls being separated by a distance equal to twice the sheet thickness. Each roll diameter was 30mm. Under load, a tapered punch bar of width 100mm pushes the sheet into the gap between the rolls. The punch force is measured as well as the displacement. At the point of plastic deformation, (i.e. the start of cracking), the load necessary to deform the sheet falls, the punch force reduces and the test is automatically stopped. The sheet thus tested is deformed into a V shape and the internal angle of the V is measured. The lower the angle, the better the formability of the sheet. This test is preferable to other formability tests because the results do not depend so much, if at all, on operator judgement. Table 2 shows the respective results.

Table 2 below shows the angle of deformation compared with pre-strain for different products

**Table 2**

| Percent pre-strain | Inventive product, 17s SHT | Inventive product, 25s SHT | Reference 6111 |
|---|---|---|---|
| 0 | 5 | 4 | 10 |
| 5 | 23 | 25 | 35 |
| 7 | 35 | 38 | 51 |
| 10 | 43 | 54 | 58 |
| 15 | 65 | 70 | 85 |

In all cases, the inventive product, regardless of solution treatment time possessed a better formability than the reference AA6111.

### c) Corrosion

The corrosion performance of the different products was analyzed using the Copper Accelerated Salt Spray test, DIN50021, (CASS test), and the Filiform corrosion test according to DIN EN3665 with treatment durations of 500 or 1000 hours.

Painted samples were prepared from 1mm thick samples of sheet. The surface of the sheet samples were prepared by zinc-phosphating and then electro-coated with Cathoguard 310 from BASF with the paint cured for 30 minutes at 180°C.

Prior to exposure the samples were subjected to cross-scribing, both weak and strong scribing, on surfaces that were either ground or lightly ground with P180 emery paper.

Evaluation of the samples after the CASS test was carried out by measuring the percentage of the scribed line that showed blistering and by measuring the maximum blister diameter size, in mm. The results are tabulated below.

### d) CASS results:

Sheet according to the invention:

| Test / sample | Not ground | | Lightly ground | |
|---|---|---|---|---|
| CASS, 6 day exposure | Weak scribes | Strong scribes | Weak scribes | Strong scribes |
| Percentage of scribe length with blisters | 25 | 50 | 75 | 100 |
| Maximum blister size | 1 | 1 | 2 | 3 |

Conventional AA6111 sheet

| Test / sample | Not ground | | Lightly ground | |
|---|---|---|---|---|
| CASS, 6 day exposure | Weak scribes | Strong scribes | Weak scribes | Strong scribes |
| Percentage of scribe length with blisters | 25 | 50 | 100 | 100 |
| Maximum blister size | 1 | 1 | 5 | 5 |

Filiform corrosion was assessed by measuring the amount of filiform filaments and the length of the filiform filaments. In terms of the amount of filaments, a value of 1 represents very few filaments, and a value of 5 represents many such filaments. In terms of length, a value of 1 represents short filaments and 5 signifies long filaments.

### e) Filiform corrosion results

Sheet according to the invention:

| Test / sample | Not ground | | Lightly ground | |
|---|---|---|---|---|
| Filiform corrosion, **500hrs** | Weak scribes | Strong scribes | Weak scribes | Strong scribes |
| Amount of filaments | 1 | 1 | 3 | 3 |
| Length of filaments | 1 | 1 | 3 | 3 |

Conventional AA6111 sheet

| Test / sample | Not ground Lightly ground | | | |
|---|---|---|---|---|
| Filiform corrosion, **500hrs** | Weak scribes | Strong scribes | Weak scribes | Strong scribes |
| Amount of filaments | 4 | 4 | 4 | 4 |
| Length of filaments | 2 | 2 | 3 | 3 |

Sheet according to the invention:

| Test / sample | Not ground | | Lightly ground | |
|---|---|---|---|---|
| Filiform corrosion, **1000hrs** | Weak scribes | Strong scribes | Weak scribes | Strong scribes |
| Amount of filaments | 1 | 1 | 4 | 4 |
| Length of filaments | 1 | 1 | 3 | 3 |

Conventional AA6111 sheet

| Test / sample | Not ground | | Lightly ground | |
|---|---|---|---|---|
| Filiform corrosion, **1000hrs** | Weak scribes | Strong scribes | Weak scribes | Strong scribes |
| Amount of filaments | 4 | 5 | 4 | 4 |
| Length of filaments | 2 | 2 | 4 | 4 |

The CASS results after 6 days exposure to the salt spray solution were less conclusive than the Filiform corrosion results but, nevertheless, in all cases, the clad product showed better or equal corrosion performance compared with the conventional AA6111 alloy.

As a result of this work it has been possible to create a new product with improved strength levels, improved formability and improved corrosion resistance compared with the most common, commercial, high strength 6XXX series alloy sheet. This new product according to the invention is particularly suitable for uses as automotive and aerospace sheet product as well as for road and rail transportation, for instance trucks, buses, railcars and the like.

## Claims

1. A clad sheet product comprising a core layer and at least one clad layer wherein the core comprises an alloy of the following composition in weight %:
| | |
|---|---|
| Mg | 0.90 - 1.40 |
| Si | 1.00 - 1.40 |
| Cu | 0.80 - 1.40 |
| Mn | < 0.40 |
| Cr | < 0.20 |
| Fe | < 0.30 |
others < 0.05 each and < 0.15 in total
balance aluminium
and the at least one clad layer comprises an alloy of the following composition in weight %:
| | |
|---|---|
| Mg | 0.30 - 0.70 |
| Si | 0.30 - 0.80 |
| Cu | < 0.30 |
| Mn | < 0.30 |
| Fe | < 0.30 |
others < 0.05 each and < 0.15 in total
balance aluminium.

2. The clad sheet product according to claim 1, **characterized in that** the Si content in the at least one clad layer is more than 0.5 weight %, preferably with a target value of about 0.60 weight %.

3. The clad sheet product according to one of the preceding claims, **characterized in that** the Mg content in the at least one clad layer is 0.60 - 0.70 weight %, preferably with a target value of about 0.61 weight %.

4. The clad sheet product according to one of the preceding claims, **characterized in that** the Mn content in the at least one clad layer is 0.05 - 0.20 weight %, preferably with a target value of about 0.06 weight %.

5. The clad sheet product according to one of the preceding claims, **characterized in that** the Mg content in the core layer is about 0.90 - 1.10 weight %, preferably with a target value of about 0.95 weight %.

6. The clad sheet product according to one of the preceding claims, **characterized in that** the Si content in the core layer is about 1.00 - 1.10 weight %, preferably with a target value of about 1.06 weight %.

7. The clad sheet product according to one of the preceding claims, **characterized in that** the Cu content in the core layer is about 0.80 - 1.00 weight %, preferably with a target value of about 0.83 weight %.

8. The clad sheet product according to one of the preceding claims, **characterized in that** the Mn content in the core layer is about 0.30 - 0.35 weight %, preferably with a target value of about 0.32 weight %.

9. The clad sheet product according to one of the preceding claims, **characterized in that** the clad sheet product has a yield strength Rp 0.2 of at least 140 MPa, in its T4 temper condition.

10. The clad sheet product according to one of the preceding claims, **characterized in that** the clad sheet product has a bake hardened yield strength Rp 0.2 of at least 210 MPa, preferably of at least 240 MPa.

11. The clad sheet product according to one of the preceding claims, **characterized in that** the clad sheet product, in its T4 temper condition, has a maximum angle of deformation of 30° at a pre-strain of 5%.

12. The clad sheet product according to claims 11, **characterized in that** the clad sheet product, in its T4 temper condition, has a maximum angle of deformation of 40° at a pre-strain of 7%.

13. The clad sheet product according to claims 11 or 12, **characterized in that** the clad sheet product, in its T4 temper condition, has a maximum angle of deformation of 55° at a pre-strain of 10%.

14. The clad sheet product according to claims 11 to 13, **characterized in that** the clad sheet product, in its T4 temper condition, has a maximum angle of deformation of 75° at a pre-strain of 15%.

15. A method of producing a clad sheet product according to any one of the preceding claims comprising the steps of:
- preparing a composite ingot having one core layer and at least one clad layer;
- performing a homogenization treatment;
- hot rolling the homogenized composite ingot to a hot rolled sheet product;
- cold rolling the hot rolled sheet product to a cold rolled sheet product;
- performing a solutionizing treatment; and
- quenching the solutionized cold rolled sheet product, followed by pre-aging and slow cooling to room temperature,
**characterized in that** the preparation of the composite ingot is carried out by applying a co-casting method.

16. The method according to claim 15, **characterized in that** the co-casting method comprises the following steps:
providing an open ended annular mould having a feed end and an exit end wherein molten metal is added at the feed end and a solidified ingot is extracted from the exit end;
providing at least one divider wall to divide the feed end into at least two separate feed chambers, the divider walls terminating above the exit end of the mould and where each feed chamber is adjacent at least one other feed chamber;
feeding a first stream of a first alloy to one of the pair of feed chambers to form a pool of metal in the first chamber;
feeding a second stream of a second alloy through the second of the pair of feed chambers to form a pool of metal in the second chamber;
the first metal pool contacting the divider wall between the pair of chambers to cool the first pool so as to form a self supporting surface adjacent the divider wall;
the second metal pool being brought into contact with the first pool so that the second pool first contacts the self-supporting surface of the first pool at a point where the temperature of the self-supporting surface is between the solidus and liquidus temperatures of the first alloy.

17. The method according to claims 15 or 16, **characterized in that** the homogenization treatment is performed at a temperature of between 500 and 550°C for 15 - 20 hours, preferably after a heating-up time of more than 8 hours.

18. The method according to claims 15 to 17, **characterized in that** the homogenization temperature is about 530°C and that the heating-up time is about 10 hours.

19. The method according to claims 15 to 18, **characterized in that** the final gauge of the cold rolled sheet product is in the range of 1.0 to 1.2 mm.

20. The method according to claims 15 to 19, **characterized in that** the solution heat treatment is performed in a temperature range of between 550 and 590°C.

21. The method according to claim 20, **characterized in that** the solution heat treatment is performed in a continuous furnace, the temperature of which is in the range of 570 to 590°C.

22. The method according to claims 20 or 21, **characterized in that** the duration of the cold rolled sheet product in the continuous furnace amounts to between 15 and 30 seconds.

23. The method according to claims 15 to 22, **characterized in that** the quenching step comprises water quenching the solution heat treated sheet product.

24. The use of the clad product according to claims 1 to 14 as an automotive sheet product.

25. The use of the clad product according to claims 1 to 14 as an aerospace sheet product.

## Patentansprüche

1. Plattiertes Blechprodukt, umfassend eine Kernschicht und mindestens eine Plattierungsschicht, wobei der Kern eine Legierung aus der folgenden Zusammensetzung in Gew.-% umfasst:
| | |
|---|---|
| Mg | 0,90 - 1,40 |
| Si | 1,00 - 1,40 |
| Cu | 0,80 - 1.40 |
| Mn | <0,40 |
| Cr | <0,20 |
| Fe | <0,30 |
andere jeweils <0,05 und insgesamt <0,15 Aluminium als Rest,
und worin die mindestens eine Plattierungsschicht eine Legierung der folgenden Zusammensetzung in Gew.-% umfasst:
| | |
|---|---|
| Mg | 0,30 - 0,70 |
| Si | 0,30 - 0,80 |
| Cu | <0,30 |
| Mn | <0,30 |
| Fe | <0,30 |
andere <0,05 und insgesamt <0,15 Aluminium als Rest.

2. Plattiertes Blechprodukt nach Anspruch 1, **dadurch gekennzeichnet, dass** der Si-Gehalt in der mindestens einen Plattierungsschicht mehr als 0,5 Gew.-% beträgt, vorzugsweise mit einem Zielwert von etwa 0,60 Gew.-%.

3. Plattiertes Blechprodukt nach einem der vorhergehenden Ansprüche, **dadurch gekennzeichnet, dass** der Mg-Gehalt der mindestens einen Plattierungsschicht 0,60 - 0,70 Gew.-% ist, vorzugsweise mit einem Zielwert von etwa 0,61 Gew.-%.

4. Plattiertes Blechprodukt nach einem der vorhergehenden Ansprüche, **dadurch gekennzeichnet, dass** der Mn-Gehalt in der mindestens einen Plattierungsschicht 0,05 - 0,20 Gew.-% ist, vorzugsweise mit einem Zielwert von etwa 0,06 Gew.-%.

5. Plattiertes Blechprodukt nach einem der vorhergehenden Ansprüche, **dadurch gekennzeichnet, dass** der Mg-Gehalt in der Kernschicht etwa 0,90 - 1,10 Gew.-% ist, vorzugsweise mit einem Zielwert von etwa 0,95 Gew.-%.

6. Plattiertes Blechprodukt nach einem der vorhergehenden Ansprüche, **dadurch gekennzeichnet, dass** der Si-Gehalt in der Kernschicht etwa 1,00 - 1,10 Gew.-% ist, vorzugsweise mit einem Zielwert von etwa 1,06 Gew.-%.

7. Plattiertes Blechprodukt nach einem der vorhergehenden Ansprüche, **dadurch gekennzeichnet, dass** der Cu-Gehalt in der Kernschicht etwa 0,80 - 1,00 Gew.-% ist, vorzugsweise mit einem Zielwert von etwa 0,83 Gew.-%.

8. Plattiertes Blechprodukt nach einem der vorhergehenden Ansprüche, **dadurch gekennzeichnet, dass** der Mn-Gehalt in der Kernschicht etwa 0,30 - 0,35 Gew.-% ist, vorzugsweise mit einem Zielwert von etwa 0,32 Gew.-%.

9. Plattiertes Blechprodukt nach einem der vorhergehenden Ansprüche, **dadurch gekennzeichnet, dass** das plattierte Blechprodukt eine Streckgrenze Rp 0,2 von mindestens 140 MPa in seinem T4-Temperzustand aufweist.

10. Plattiertes Blechprodukt nach einem der vorhergehenden Ansprüche, **dadurch gekennzeichnet, dass** das plattierte Blechprodukt eine Bake-Hardening-Streckgrenze Rp 0,2 von mindestens 210 MPa, vorzugsweise von mindestens 240 MPa aufweist.

11. Plattiertes Blechprodukt nach einem der vorhergehenden Ansprüche, **dadurch gekennzeichnet, dass** das plattierte Blechprodukt in seinem T4-Temperzustand einen maximalen Verformungswinkel von 30° bei einer Vorspannung von 5% aufweist.

12. Plattiertes Blechprodukt nach Anspruch 11, **dadurch gekennzeichnet, dass** das plattierte Blechprodukt in seinem T4-Temperzustand einen maximalen Verformungswinkel von 40° bei einer Vorspannung von 7% aufweist.

13. Plattiertes Blechprodukt nach Anspruch 11 oder 12, **dadurch gekennzeichnet, dass** das plattierte Blechprodukt in seinem T4-Temperzustand einen maximalen Verformungswinkel von 55° bei einer Vorspannung von 10% aufweist.

14. Plattiertes Blechprodukt nach den Ansprüchen 11 bis 13, **dadurch gekennzeichnet, dass** das plattierte Blechprodukt in seinem T4-Temperzustand einen maximalen Verformungswinkel von 75° bei einer Vorspannung von 15% aufweist.

15. Verfahren zur Herstellung eines plattierten Blechproduktes nach einem der vorhergehenden Ansprüche, umfassend die Schritte
- Herstellung eines Verbundblocks mit einer Kernschicht und mindestens einer Plattierungsschicht;
- Durchführen einer Homogenisierungsbehandlung;
- Warmwalzen des homogenisierten Verbundblocks zu einem warmgewalzten Blechprodukt;
- Kaltwalzen des warmgewalzten Blechprodukts zu einem kaltgewalzten Blechprodukt;
- Durchführen einer Lösungsglühbehandlung; und
- Abschrecken des lösungsgeglühten kaltgewalzten Blechprodukts, gefolgt von Voralterung und langsamer Abkühlung auf Raumtemperatur,
**dadurch gekennzeichnet, dass** die Herstellung des Verbundblocks unter Anwendung eines Co-Casting-Verfahrens durchgeführt wird.

16. Verfahren nach Anspruch 15, **dadurch gekennzeichnet, dass** das Co-Casting-Verfahren die folgenden Schritte umfasst:
Bereitstellen einer ringförmigen Form mit offenem Ende mit einem Zuführende und einem Austrittsende, wobei geschmolzenes Metall am Zuführende zugeführt wird und ein verfestigter Block an dem Austrittsende gewonnen wird;
Bereitstellen mindestens einer Trennwand zum Unterteilen des Zuführendes in mindestens zwei getrennte Zuführkammern, wobei die Trennwände über dem Austrittsende der Form enden und jede Zuführkammer an mindestens eine andere Zuführkammer angrenzt;
Zuführen eines ersten Stroms einer ersten Legierung zu einer der beiden Zuführkammern, um einen Metallpool in der ersten Kammer zu bilden;
Zuführen eines zweiten Stroms einer zweiten Legierung durch die zweite der beiden Zuführkammern, um einen Metallpool in der zweiten Kammer zu bilden;
wobei der erste Metallpool mit der Trennwand zwischen dem Kammerpaar in Kontakt ist, um den ersten Pool zu kühlen, um eine selbsttragende Oberfläche neben der Trennwand zu bilden;
der zweite Metallpool in Kontakt mit dem ersten Pool gebracht wird, so dass der zweite Pool zuerst mit der selbsttragenden Oberfläche des ersten Pools an einem Punkt in Kontakt tritt, an dem die Temperatur der selbsttragenden Oberfläche zwischen den Solidus- und Liquidustemperaturen der ersten Legierung liegt.

17. Verfahren nach den Ansprüchen 15 oder 16, **dadurch gekennzeichnet, dass** die Homogenisierungsbehandlung bei einer Temperatur zwischen 500 und 550 °C für 15 - 20 Stunden, vorzugsweise nach einer Aufheizzeit von mehr als 8 Stunden, durchgeführt wird.

18. Verfahren nach den Ansprüchen 15 bis 17, **dadurch gekennzeichnet, dass** die Homogenisierungstemperatur etwa 530° C beträgt und dass die Aufheizzeit etwa 10 Stunden beträgt.

19. Verfahren nach den Ansprüchen 15 bis 18, **dadurch gekennzeichnet, dass** die Enddicke des kaltgewalzten Blechproduktes im Bereich von 1,0 bis 1,2 mm liegt.

20. Verfahren nach den Ansprüchen 15 bis 19, **dadurch gekennzeichnet, dass** die Lösungswärmebehandlung in einem Temperaturbereich zwischen 550 und 590 ° C durchgeführt wird.

21. Verfahren nach Anspruch 20, **dadurch gekennzeichnet, dass** die Lösungswärmebehandlung in einem Durchlaufofen durchgeführt wird, dessen Temperatur im Bereich von 570 bis 590°C liegt.

22. Verfahren nach den Ansprüchen 20 oder 21, **dadurch gekennzeichnet, dass** die Verweilzeit des kaltgewalzten Blechproduktes im Durchlaufofen zwischen 15 und 30 Sekunden beträgt.

23. Verfahren nach den Ansprüchen 15 bis 22, **dadurch gekennzeichnet, dass** der Abschreckschritt das Abschrecken des lösungswärmebehandelten Blechprodukts mit Wasser umfasst.

24. Verwendung des Plattierungsprodukts nach den Ansprüchen 1 bis 14 als Automobilblechprodukt.

25. Verwendung des Plattierungsprodukts nach den Ansprüchen 1 bis 14 als Blechprodukt für Luft- und Raumfahrt.

## Revendications

1. Produit de tôle plaquée comprenant une couche d'âme et au moins une couche plaquée dans lequel l'âme comprend un alliage de la composition suivante en % en poids :
| | |
|---|---|
| Mg | 0,90 à 1,40 |
| Si | 1,00 à 1,40 |
| Cu | 0,80 à 1,40 |
| Mn | < 0,40 |
| Cr | < 0,20 |
| Fe | < 0,30 |
autres < 0,05 chacun et < 0,15 au total
le reste étant de l'aluminium
et l'au moins une couche plaquée comprend un alliage de la composition suivante en % en poids :
| | |
|---|---|
| Mg | 0,30 à 0,70 |
| Si | 0,30 à 0,80 |
| Cu | < 0,30 |
| Mn | < 0,30 |
| Fe | < 0,30 |
autres < 0,05 chacun et < 0,15 au total
le reste étant de l'aluminium.

2. Produit de tôle plaquée selon la revendication 1, **caractérisé en ce que** la teneur en Si dans l'au moins une couche plaquée est supérieure à 0,5 % en poids, de préférence avec une valeur cible d'environ 0,60 % en poids.

3. Produit de tôle plaquée selon l'une des revendications précédentes, **caractérisé en ce que** la teneur en Mg dans l'au moins une couche plaquée va de 0,60 à 0,70 % en poids, de préférence avec une valeur cible d'environ 0,61 % en poids.

4. Produit de tôle plaquée selon l'une des revendications précédentes, **caractérisé en ce que** la teneur en Mn dans l'au moins une couche plaquée va de 0,05 à 0,20 % en poids, de préférence avec une valeur cible d'environ 0,06 % en poids.

5. Produit de tôle plaquée selon l'une des revendications précédentes, **caractérisé en ce que** la teneur en Mg dans la couche d'âme va de 0,90 à 1,10 % environ en poids, de préférence avec une valeur cible d'environ 0,95 % en poids.

6. Produit de tôle plaquée selon l'une des revendications précédentes, **caractérisé en ce que** la teneur en Si de la couche d'âme va de 1,00 à 1,10 % environ en poids, de préférence avec une valeur cible d'environ 1,06 % en poids.

7. Produit de tôle plaquée selon l'une des revendications précédentes, **caractérisé en ce que** la teneur en Cu dans la couche d'âme va de 0,80 à 1,00 % environ en poids, de préférence avec une valeur cible d'environ 0,83 % en poids.

8. Produit de tôle plaquée selon l'une des revendications précédentes, **caractérisé en ce que** la teneur en Mn dans la couche d'âme va de 0,30 à 0,35 % environ en poids, de préférence avec une valeur cible d'environ 0,32 % en poids.

9. Produit de tôle plaquée selon l'une des revendications précédentes, **caractérisé en ce que** le produit de tôle plaquée a une limite d'élasticité Rp 0,2 d'au moins 140 MPa dans son état de trempe T4.

10. Produit de tôle plaquée selon l'une des revendications précédentes, **caractérisé en ce que** le produit de tôle plaquée a une limite d'élasticité Rp 0,2 après durcissement par cuisson d'au moins 210 MPa, de préférence d'au moins 240 MPa.

11. Produit de tôle plaquée selon l'une des revendications précédentes, **caractérisé en ce que** le produit de tôle plaquée dans son état de trempe T4 a un angle de déformation maximal de 30° sous une précontrainte de 5 %.

12. Produit de tôle plaquée selon la revendication 11, **caractérisé en ce que** le produit de tôle de tôle plaquée, dans son état de trempe T4, a un angle de déformation maximal de 40° sous une précontrainte de 7 %.

13. Produit de tôle plaquée selon les revendications 11 ou 12, **caractérisé en ce que** le produit de tôle plaquée, dans son état de trempe T4, a un angle de déformation maximal de 55° sous une précontrainte de 10 %.

14. Produit de tôle plaquée selon les revendications 11 à 13, **caractérisé en ce que** le produit de tôle plaquée, dans son état de trempe T4, a un angle de déformation maximal de 75° sous une précontrainte de 15 %.

15. Procédé de production d'un produit de tôle plaquée selon l'une quelconque des revendications précédentes, comprenant les étapes de :
- la préparation d'un lingot composite ayant une couche d'âme et au moins une couche plaquée ;
- l'exécution d'un traitement d'homogénéisation ;
- le laminage à chaud du lingot composite homogénéisé en un produit de tôle laminée à chaud ;
- le laminage à froid du produit de tôle laminée à chaud en un produit de tôle laminée à froid ;
- l'exécution d'un traitement de mise en solution ; et
- la trempe du produit de tôle laminée à froid mis en solution, suivie du prérevenu et du refroidissement lent à la température ambiante,
**caractérisé en ce que** la préparation du lingot composite est effectuée par application d'un procédé de coulée simultanée.

16. Procédé selon la revendication 15, **caractérisé en ce que** le procédé de coulée simultanée comprend les étapes suivantes :
la fourniture d'un moule annulaire à extrémité ouverte ayant une extrémité d'alimentation et une extrémité de sortie dans lequel du métal fondu est ajouté au niveau de l'extrémité d'alimentation et un lingot solidifié est extrait à partir de l'extrémité de sortie ;
la fourniture d'au moins une paroi de séparation pour diviser l'extrémité d'entrée en au moins deux chambres d'entrée distinctes, les parois de séparation se terminant au-dessus de l'extrémité de sortie du moule et dans lequel chaque chambre d'alimentation est adjacente à au moins une autre chambre d'alimentation ;
la distribution d'un premier flux d'un premier alliage vers l'une de la paire de chambres d'alimentation de sorte à former une nappe de métal dans la première chambre ;
la distribution d'un second flux d'un second alliage à travers la seconde de la paire de chambres d'alimentation de sorte à former une nappe de métal dans la seconde chambre ;
la mise en contact de la première nappe de métal avec la paroi de séparation entre la paire de chambres afin de refroidir la première nappe de sorte à former une surface autoportante de manière adjacente à la paroi de séparation ;
la mise en contact de la seconde nappe de métal avec la première nappe de sorte à ce que la seconde nappe entre en contact avec la surface autoportante de la première nappe au niveau d'un point où la température de la surface autoportante est entre les températures de solidus et de liquidus du premier alliage.

17. Procédé selon les revendications 15 ou 16, **caractérisé en ce que** le traitement d'homogénéisation est effectué à une température allant de 500 à 550 °C pendant 15 à 20 heures, de préférence après un temps de chauffage de plus de 8 heures.

18. Procédé selon les revendications 15 à 17, **caractérisé en ce que** la température d'homogénéisation est d'environ 530 °C et le temps de chauffage est d'environ 10 heures.

19. Procédé selon les revendications 15 à 18, **caractérisé en ce que** l'épaisseur finale du produit de tôle laminée à froid est dans la plage de 1,0 à 1,2 mm.

20. Procédé selon les revendications 15 à 19, **caractérisé en ce que** le traitement thermique de mise en solution est effectué dans une plage de températures allant de 500 à 590 °C.

21. Procédé selon la revendication 20, **caractérisé en ce que** le traitement thermique de mise en solution est exécuté dans un four continu dont la température est dans la plage de 570 à 590 °C.

22. Procédé selon les revendications 20 ou 21, **caractérisé en ce que** le temps de séjour du produit de tôle laminée à froid dans le four continu va de 15 à 30 secondes.

23. Procédé selon les revendications 15 à 22, **caractérisé en ce que** l'étape de trempe comprend la trempe à l'eau du produit de tôle traitée thermiquement par mise en solution.

24. Utilisation du produit plaqué selon les revendications 1 à 14 en tant que produit de tôle pour automobile.

25. Utilisation du produit plaqué selon les revendications 1 à 14 en tant que produit de tôle pour application aérospatiale.
